# EUROPEAN PATENT SPECIFICATION

(11) **EP 1 309 890 B1**
(45) Date of publication and mention of the grant of the patent: **03.11.2004**
(21) Application number: 01954222.4
(22) Date of filing: 10.08.2001
(51) Int. Cl.: G02B 6/12, C03B 37/075

(54) **HOLEY OPTICAL FIBRES, PREFORMS AND MANUFACTURING METHODS**
GLASFASERN MIT LÖCHERN, VORFORMEN UND HERSTELLUNGSVERFAHREN
FIBRES OPTIQUES TROUEES, PREFORMES ET PROCEDES DE FABRICATION

(30) Priority: 18.08.2000 EP 00307090; 06.09.2000 US 230458 P
(43) Date of publication of application: 14.05.2003
(73) Proprietor: UNIVERSITY OF SOUTHAMPTON, Southampton, Hampshire SO17 1BJ (GB)
(72) Inventor: BELARDI, Walter, Highfield Southampton Hampshire SO17 1BJ (GB); FURUSAWA, Kentaro, Highfield Southampton Hampshire SO17 1BJ (GB); MONRO, Tanya, Highfield Southampton Hampshire SO17 1BJ (GB); RICHARDSON, David, Highfield Southampton Hampshire SO17 1BJ (GB); TURNER, Paul, Highfield Southampton Hampshire SO17 1BJ (GB)
(74) Representative: Haines, Miles John
(86) International application number: PCT/GB2001/003618
(87) International publication number: WO 2002/016980

(56) References cited:
- EP-A- 0 810 453
- WO-A-99/64903
- BENNETT P J ET AL: "ROBUST, LARGE AIR FILL HOLEY FIBRE" BALTIMORE, MD, MAY 23 - 28, 1999,NEW YORK, NY: IEEE,US, 1999, page 293 XP000885360 ISBN: 0-7803-5658-6 cited in the application
- BENNETT P J ET AL: "TOWARD PRACTICAL HOLEY FIBER TECHNOLOGY: FABRICATION, SPLICING, MODELING, AND CHARACTERIZATION" OPTICS LETTERS,OPTICAL SOCIETY OF AMERICA, WASHINGTON,US, vol. 24, no. 17, 1 September 1999 (1999-09-01), pages 1203-1205, XP000873620 ISSN: 0146-9592 cited in the application

## Description

### BACKGROUND OF THE INVENTION

The invention relates to holey fibres and to a method of fabricating holey fibres and holey fibre preforms.

A holey fibre is an optical fibre whose optical confinement mechanism and properties are affected by an array of air holes defined by cavities that run lengthwise down the fibre. Light can be guided within holey fibres by two distinct mechanisms. First, with periodic arrangements of air holes, guidance can be obtained through photonic band gap effects [1]. Second, guidance can be obtained from volume average refractive index effects. This second guidance mechanism does not rely on periodicity of the air holes [2].

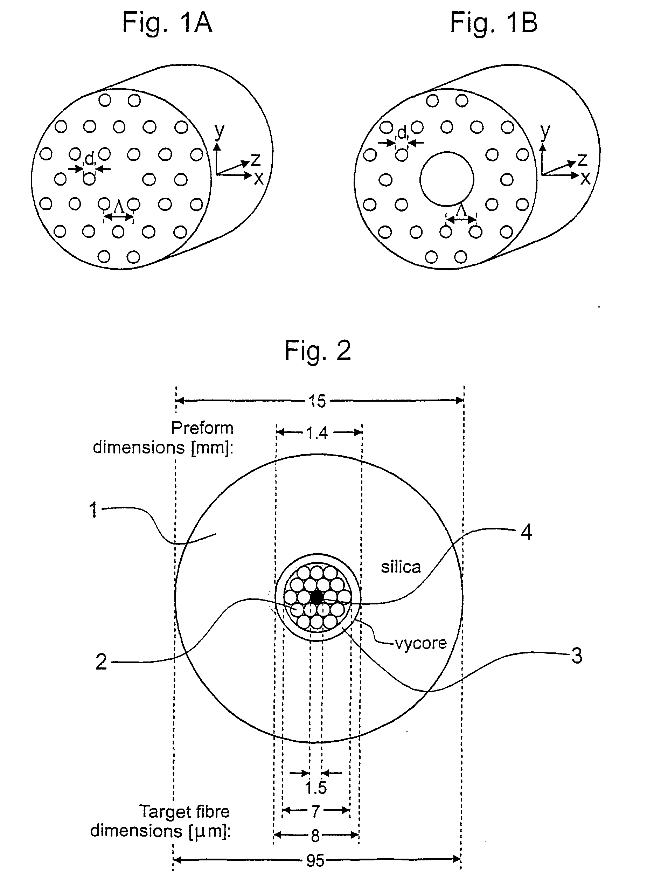

Generally, a holey fibre has a solid core (Figure 1A of the accompanying drawings) or a hollow core (Figure 1B of the accompanying drawings) surrounded by a holey cladding region. The holey fibres illustrated have a hole structure characterised by a hole diameter, d, and an interhole spacing, i.e. pitch, Λ.

A holey fibre structure is fabricated by stacking tubular capillaries in a hexagonal close packed array within a larger tube that forms an outer jacket or casing containing the capillaries. To form a solid core holey fibre as in Figure 1A, one of the tubular capillaries is removed from the stack and replaced with a solid rod of the same outer dimensions. To form a hollow core holey fibre as in Figure 1B, a number of capillaries in the centre of the stack are removed. The fibre stack is then drawn into a preform by a caning procedure and then placed in a fibre drawing tower and drawn into fibre. The finished holey fibre structure is then characterised by an inner core (solid or hollow) surrounded by a holey cladding. Fabrication of holey fibres is discussed further in the literature [3][4].

To realise holey fibres for many applications, it is desirable to fabricate a holey fibre with relatively small feature sizes, such as interhole spacing, i.e. pitch, Λ∼1-2 µm. Fibres with such small hole feature sizes have a number of interesting and unique properties such as anomalous dispersion at short wavelength, high optical non-linearity and the possibility for large evanescent fields in air.

To satisfy the desire for small pitch, it is necessary to construct a preform structure with relatively small capillaries. Because of the small size of the capillaries, several hundred capillary elements are needed to provide a structure which is large enough to handle conveniently during the fabrication stages of preform caning and fibre drawing. Moreover, to be practical, the fabricated fibre needs to have an outer diameter of about 80 µm or more. However, the large number of small capillaries required to fulfil these requirements presents difficulties in the fabrication and also results in a weak fibre.

An improvement is to stack the capillaries within an outer jacket which has a relatively thick wall, as shown by Figure 2 of the accompanying drawings which shows a thick wall silica outer jacket 1 defining an inner cylindrical space in which is placed two rings of silica cladding capillaries 2 which are arranged concentrically about a centrally placed solid silica core 4. In the illustrated example, the inner space of the outer jacket 1 is additionally sleeved by a vycore tube 3. The dimensions included on the top of the figure are exemplary preform dimensions in millimetres, whereas the dimensions at the bottom of the figure are target fibre dimensions in microns. Use of a thick wall outer jacket has the advantage of allowing the number of capillaries required to be greatly reduced.

The thick wall outer jacket approach has been demonstrated by other groups. However, in the experience of the present inventors at least, it has proved difficult to reliably and controllably retain small hole features during the fibre pulling stage of the fabrication process when using such thick walled outer jacket structures. It is believed that this problem is attributable to the relatively small ratio of air to glass in the thick-walled structure, and to the relatively large thermal mass of the glass of the outer jacket as the preform is melted in the drawing tower furnace during the fibre drawing process.

It is therefore an aim of the invention to provide an improved method for fabricating holey fibres with relatively small feature sizes.

### SUMMARY OF THE INVENTION

According to a first aspect of the invention there is provided an optical fibre structure comprising a holey fibre arranged in a holey outer support structure according to claim 1.

The holey outer support structure preferably has a lateral feature size at least five or ten times greater than that of the holey fibre.

The holey fibre may have a solid or hollow core surrounded by a holey cladding which may comprise cavities arranged in a plurality of rings concentrically about the core, e.g. 2-6 or more rings.

The holey outer support structure is conveniently made of an arrangement of tubular structures, each of roughly the same lateral dimensions as the holey fibre. The lateral dimensions are preferably between one fifth and five times that of the holey fibre, preferably between one half and twice that of the holey fibre. The holey outer support structure may conveniently further comprise an outer jacket surrounding the tubular structures.

An optical fibre structure embodying the invention possesses a microstructured transverse cross section in which the microstructuring in the holey fibre itself is on the scale of the wavelength of the light guided by the holey fibre, but is on a considerably coarser scale within an outer holey structure supporting the holey fibre (e.g. five times, ten times or a greater multiple of the wavelength).

With the invention it is possible to produce robust, coated and jacketed fibres with microstructured core features relatively easily using existing fibre fabrication technology.

According to a second aspect of the invention there is provided an optical fibre preform comprising: (a) a core rod; (b) a plurality of cladding capillaries arranged around the core rod; (c) an inner jacket containing the cladding capillaries; and (d) a plurality of support capillaries arranged around the inner jacket. The preform may further comprise an outer jacket containing the support capillaries.

According to a third aspect of the invention there is provided a method of making a holey fibre preform comprising: (a) arranging a core rod and a plurality of cladding capillaries within a first jacket; (b) arranging the first jacket and a plurality of support capillaries in a second jacket to form a tube assembly; and (c) reducing the tube assembly to a preform. The support capillaries may be arranged within an outer j acket.

According to a fourth aspect of the invention there is provided a method of making a holey fibre comprising: (a) making a holey fibre preform according to the method of the third aspect; and (b) drawing a holey fibre from the preform. The support capillaries may be arranged within an outer jacket.

According to a fifth aspect of the invention there is provided a method of guiding light according to claim 23. In a holey fibre structure comprising a holey fibre arranged in a holey outer support structure, the light having a mode field extending in a cross-sectional plane through the holey fibre, wherein the mode field is mainly confined in the holey fibre. In other words, the structure is designed so that the holey outer support structure does not contribute in any significant way to the optical guiding properties of the holey fibre contained within it. Preferably, the mode field has less than one of 10%, 5%, 2%, 1%, 0.5% and 0.01% of its power extending beyond the holey fibre into the holey outer support structure.

### BRIEF DESCRIPTION OF THE DRAWINGS

For a better understanding of the invention and to show how the same may be carried into effect reference is now made by way of example to the accompanying drawings in which:
Figure 1A is a schematic section of a solid core holey fibre;
Figure 1B is a schematic section of a hollow core holey fibre;
Figure 2 is a schematic diagram of a holey fibre preform according to a prior art approach;
Figure 3 is an end view of a holey fibre preform according to an embodiment of the invention;
Figure 4 is a cross-section of a holey fibre structure according to an example of the invention;
Figure 5 is an expanded view of the holey fibre region of the holey fibre structure of Figure 4; and
Figure 6 is a cross-section of the holey fibre region of a holey fibre structure according to another example of the invention.

### DETAILED DESCRIPTION

In order to get around the problem of applying a relatively thick-walled jacket, of large thermal mass, to a relatively fine microstructured inner cane, an approach has been adopted in the embodiments described below that may be viewed as replacing the thick wall outer jacket of the prior art approach of Figure 2 with a combination of an outer thin wall jacket and an inner stack of relatively large capillaries. A microstructured inner cane containing the core and holey cladding is then supported by the larger scale capillaries.

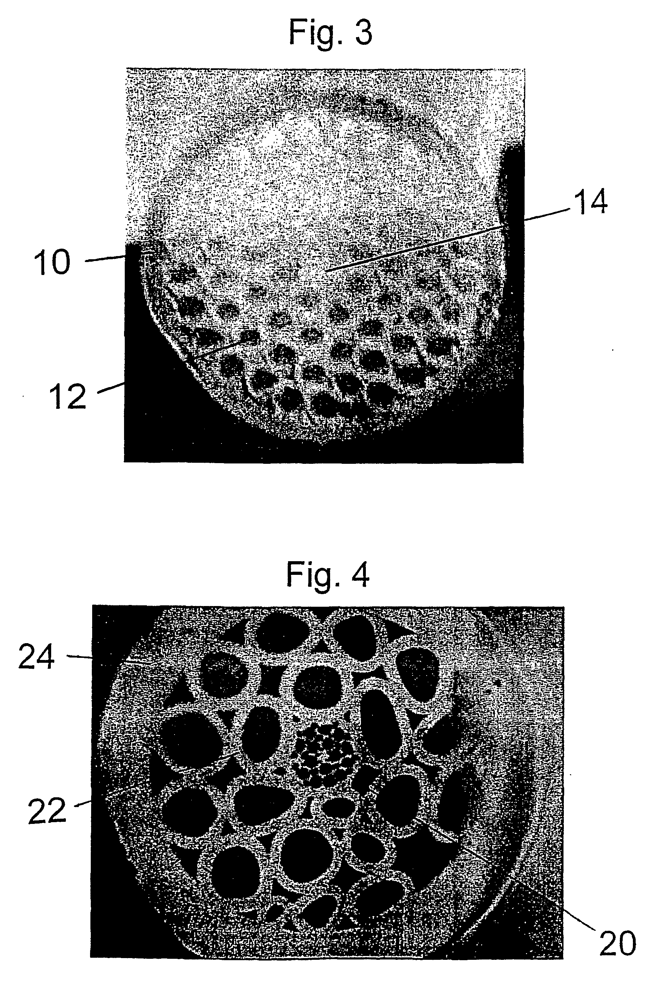

Figure 3 is an end view of a holey fibre preform according to this approach. The preform comprises an inner cane 14 containing the elements that will form the holey fibre after fibre drawing. Although not clearly evident from this figure, the central region comprises a solid core rod surrounded by a plurality of small capillaries arranged around the core rod, which ultimately form the holey cladding of the fibre. The rod and capillaries are retained in an inner jacket which forms the outer surface of the inner cane. The small cladding capillaries are arranged in one or more rings concentrically about the core rod. Generally at least two rings of cladding capillaries will be needed for most holey fibre applications. In fact, two is a preferred number, since it represents the smallest number of rings for providing the optical properties desired in many applications. The number of rings may be greater, e.g. three, four, five, six or more, but it should be borne in mind that very large numbers of capillaries will present fabrication difficulties, as described further above in relation to the prior art.

The inner cane 14 is supported by a plurality of relatively large-scale support capillaries 12 arranged around the inner cane. The support capillaries are retained in a relatively thin outer jacket 10. In an alternative embodiment, the outer jacket could be dispensed with and the support capillaries fused together at the top and bottom prior to pulling to hold them together. As can be seen from the figure, the support capillaries have an outside diameter approximately the same as the outside diameter of the inner cane 14, so that the inner cane can be arranged with the support capillaries in a hexagonal close packed array. More generally, it is convenient for the support capillaries to be of the same order of magnitude of lateral dimension as the inner cane. Preferably the support capillaries have lateral dimensions of between one fifth and five times that of the inner cane, more especially between one half and twice that of the inner jacket.

The capillaries can be made in a variety of ways. Typically, the starting point for the capillaries is a large-scale tube. The large-scale tubes can be produced by: extrusion, milling and drilling, polishing, piercing, spin/rotational casting, other casting methods (e.g. built-in casting), compression moulding, direct bonding etc. The tubes are then caned down using a fibre draw tower to the dimensions required for the preform assembly.

With this preform design, the thermal mass of the supporting structure used to bulk out the central region of the holey fibre is significantly reduced in comparison to a thick-wall outer jacket used in the prior art. It is thus easier to pull the preform and to retain the desired form of microstructure within the vicinity of the central holey fibre region.

The completed preform is then ready for the next main stage of fibre drawing. For drawing, the preform is placed in a fibre drawing tower. Fibre drawing is performed by the controlled heating and/or cooling of the silica or other glass through a viscosity range of around 10⁶ poise. It is useful to monitor the diameter and tension of the fibre as it is being drawn and use the data thus acquired in an automatic feedback loop to control the preform feed speed, the fibre draw speed and/or other parameters related to the furnace in order to yield a uniform fibre diameter.

A principal component of the drawing tower used to pull the preform into fibre form is a heat source, which may be a graphite resistance heater or a radio-frequency (RF) furnace.

It is critical to control the fibre drawing temperature, and hence the glass viscosity, so that two criteria are met. First, the fibre drawing temperature must soften the glass to provide a viscosity for which the glass can deform and stretch into a fibre without crystallisation. Second, the softening of the glass must not be so great that the crucial internal structure, i.e. the holes, collapse and flow together. Cooling is provided above and below the furnace's hot zone. The cooling keeps the glass outside the hot zone cooled to below its crystallisation temperature.

Figure 4 is a cross-section of a holey fibre structure according to an example of the invention which has been drawn from a preform generally of the kind illustrated in Figure 3.

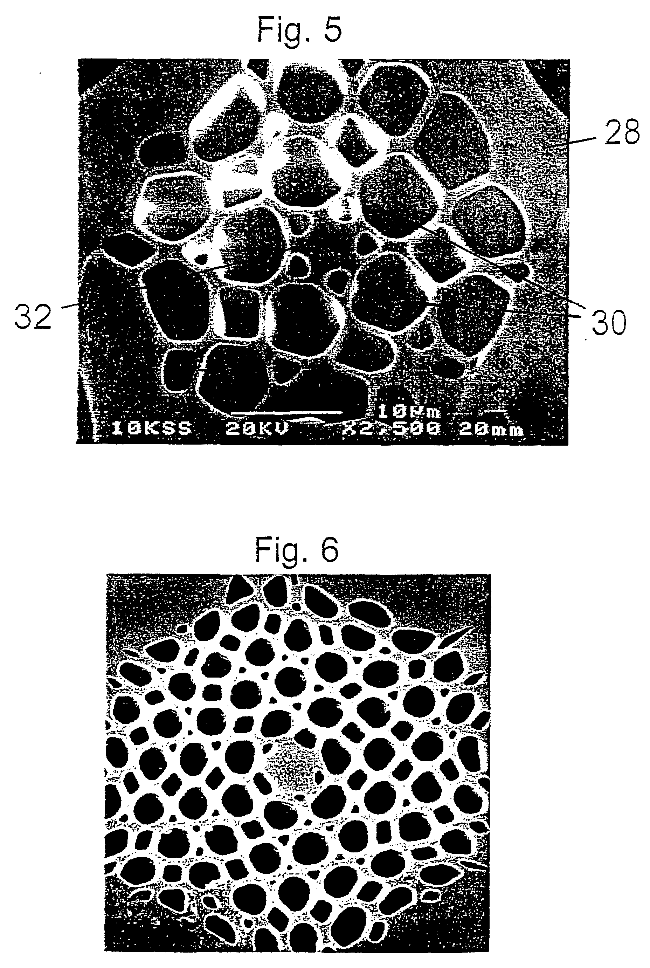

It is evident that the basic structure of the preform has been retained in the drawn holey fibre structure. Namely, the drawn holey fibre structure comprises a holey fibre 20 arranged in a holey outer support structure. The holey outer support structure comprises an arrangement of tubular structures 22 laterally bounded by a relatively thin wall outer jacket 24 of outer diameter approximately equal to 250 µm. The outer dimensions is preferably at least 80 µm. A preferred range of outer dimensions is 80 µm to between 1-5 mm. The internal structure of the holey fibre at the centre of the structure is just visible in Figure 4, but is better seen in the enlarged view of Figure 5.

Figure 5 is a magnified view of the centre region of the holey fibre structure shown in Figure 4. The holey fibre comprises a solid core 32 surrounded by a cladding 30 comprising hole rings generally concentrically arranged about the core. It will be understood that the holes will not form perfect circles around the core owing to the realities of the drawing process. The term concentric is thus not to be construed with any geometric rigour in this document. The cladding is in turn surrounded by the remnant 28 of the outer jacket of the preform. In other embodiments of the invention, the core could be hollow instead of solid, for example for photonic crystal fibre.

As well as the holey fibre of Figure 5, a range of other similarly capillary- supported holey fibres of various dimensions have been pulled. By contrast, the inventors attempts to produce fibres with a thick outer jacket, according to the prior art approach described above with reference to Figure 2, have been tended to result in loss of structural integrity of the core.

The large change in lateral feature size between the holey fibre on the one hand and the support tubes on the other hand is apparent. The support capillaries preferably have an outside diameter at least five or ten times greater than that of the holey fibre 20.

In Figure 4 it can be seen that the holey fibre 20 has an outside diameter somewhat smaller than that of the support capillaries 22. Generally, these two lateral dimensions will be comparable. Specifically, it is preferred that the tubular support structures 22 have lateral dimensions of between one fifth and five times that of the holey fibre, more especially between one half and twice that of the holey fibre.

Figure 6 is a cross-section of the central region of another holey fibre structure according to the invention. In this example, a larger number of cladding capillaries were used in the preform to form a larger number of generally concentric hole rings in the cladding. Otherwise the example of Figure 6 will be understood from the previous description.

Although the above examples uses tubes as a basis for the holey fibre preform, it will be understood that other shapes could be used either in the holey support structure or for the holey cladding part of the structure. It is sufficient that the holey outer support structure and holey cladding have a sufficient number of gaps or cavities to provide the desired properties. It will also be understood that the hole arrangement in the support structure will generally have no bearing on the optical properties of the fibre, since the fibre waveguide modes will usually have no significant power outside the holey cladding. Periodic or aperiodic arrangements may be used. It will also be understood that the holes in the cladding need not be periodic, unless the fibre is intended to have photonic crystal effects.

Holey fibre structures according to the invention may find application in many of the areas previously proposed to be of interest for holey fibres.

One application is sensing. It has been proposed that a fluid, i.e. gas or liquid, is present in the fibre cavities. A property of the fluid is then sensed by its effect on that part of the optical mode, generally an evanescent wave part, which propagates in the holey cladding region.

Another application suggested for holey fibres is for low-loss telecommunication fibre. Propagation losses may be reduced in a holey fibre, by virtue of the lower losses associated with the holes relative to the glass regions of the fibre. More fundamentally, a holey fibre with a photonic band gap could reduce losses through photonic crystal effects.

Some specific applications of interest are:
1) transport of high power optical beams (low optical non-linearity fibre);
2) low-loss optical fibre for transmission systems;
3) optical sensors (gas detection, liquid composition, medical);
4) atom optics;
5) optical manipulation of microscopic particles;
6) particle separation (by mass, induced polarisability, electric dipole moment);
7) Raman lasers;
8) non-linear optical devices;
9) referencing of a laser to specific gas absorption lines;
10) metrology; and
11) dispersion compensation in transmission systems (holey fibre structures embodying the invention can be made to exhibit high dispersion).

### REFERENCES

- 1 .: T A Birks et al: Electronic Letters, vol. 31, pages 1941-1943 (1995)
- 2.: US 5,802,236: DiGiovanni et al: Lucent Technologies Inc.
- 3.: P J Bennett et al: Optics Letters, vol. 24, pages 1203-1205 (1999)
- 4.: P J Bennett et al: CLEO '99, CWF64, page 293

## Claims

1. An optical fibre structure comprising a holey fibre (20) surrounded by a first tubular structure and arranged in a holey outer support structure, wherein the holey outer support structure comprises a plurality of further tubular structures (22,32) arranged around the first tubular structure.

2. An optical fibre structure according to claim 1, wherein the further tubular structures of the holey outer support structure have a lateral size at least five times greater than a lateral size of holes in the holey fibre (20).

3. An optical fibre structure according to claim 1, wherein the further tubular structures of the holey outer support structure have a lateral size at least ten times greater than a lateral size of holes in the holey fibre (20).

4. An optical fibre structure according to any one of the preceding claims, wherein the holey fibre (20) comprises a solid or hollow core surrounded by a holey cladding.

5. An optical fibre structure according to claim 4, wherein the holey cladding comprises cavities arranged in a plurality of rings concentrically about the core.

6. An optical fibre structure according to claim 5, wherein the number of rings is two.

7. An optical fibre structure according to claim 5, wherein the number of rings is three, four, five or six.

8. An optical fibre structure according to any one of claims 1 to 7, wherein the further tubular structures of the holey outer support structure have lateral dimensions of between one fifth and five times that of the holey fibre (20).

9. An optical fibre structure according to any one of claims 1 to 7, wherein the further tubular structures of the holey outer support structure have lateral dimensions of between one half and twice that of the holey fibre (20).

10. An optical fibre structure according to any one of the preceding claims,
wherein the holey outer support structure further comprises an outer jacket surrounding the arrangement of further tubular structures.

11. An optical fibre preform comprising:
(a) a core rod;
(b) a plurality of cladding capillaries arranged around the core rod;
(c) an inner jacket containing the cladding capillaries; and
(d) a plurality of support capillaries (12) arranged around the inner jacket;

12. An optical fibre preform according to claim 11, further comprising an outer jacket containing the support capillaries.

13. An optical fibre preform according to claim 11 or 12, wherein the support capillaries have lateral dimensions between one fifth and five times that of the inner jacket

14. An optical fibre preform according to claim 11 or 12, wherein the support capillaries have lateral dimensions between one half and twice that of the inner jacket.

15. An optical fibre preform according to any one of claims 11 to 14, wherein the core rod is hollow.

16. An optical fibre preform according to any one of claims 11 to 14, wherein the core rod is solid.

17. An optical fibre preform according to any one of claims 11 to 16, wherein the cladding capillaries are arranged in a plurality of rings concentrically about the core rod.

18. An optical fibre preform according to claim 17, wherein the number of rings is two.

19. An optical fibre preform according to claim 17, wherein the number of rings is three, four, five or six.

20. A method of making a holey fibre preform comprising:
(a) arranging a core rod and a plurality of cladding capillaries within a first jacket;
(b) arranging the first jacket and a plurality of support capillaries (12) to form a tube assembly; and
(c) reducing the tube assembly to a preform.

21. A method of making a holey fibre comprising:
(a) making a holey fibre preform according to the method of claim 20; and
(b) drawing a holey fibre from the preform.

22. A method according to claim 20 or 21, wherein the support capillaries are arranged within an outer jacket.

23. A method of guiding light along an optical fibre structure, the method comprising using an optical fibre structure comprising a holey fibre (20) arranged in a holey outer support structure, wherein the holey fibre is surrounded by a first tubular structure and wherein the holey outer support structure comprises a plurality of further tubular structures arranged around the first tubular structure, and arranging the light to have a mode field extending in a cross-sectional plane through the holey fibre, wherein the mode field is confined in the holey fibre so as to have less than one of 10%, 5%, 2%, 1%, 0.5% and 0:01% of its power extending beyond the holey fibre into the holey outer support structure.

## Revendications

1. Structure de fibre optique comprenant une fibre trouée (20) entourée par une première structure tubulaire et agencée dans une structure de support externe trouée, dans laquelle la structure de support externe trouée comprend une pluralité de structures tubulaires supplémentaires (22, 32) agencées autour de la première structure tubulaire.

2. Structure de fibre optique selon la revendication 1, dans laquelle les structures tubulaires supplémentaires de la structure de support externe trouée ont une dimension latérale au moins cinq fois supérieure à une dimension latérale des trous dans la fibre trouée (20).

3. Structure de fibre optique selon la revendication 1, dans laquelle les structures tubulaires supplémentaires de la structure de support externe trouée ont une dimension latérale au moins dix fois supérieure à une dimension latérale des trous dans la fibre trouée (20).

4. Structure de fibre optique selon l'une quelconque des revendications précédentes, dans laquelle la fibre trouée (20) comprend un coeur plein ou creux entouré par une gaine trouée.

5. Structure de fibre optique selon la revendication 4, dans laquelle la gaine trouée comprend des cavités agencées en une pluralité d'anneaux concentriques dans la région du coeur.

6. Structure de fibre optique selon la revendication 5, dans laquelle le nombre d'anneaux est égal à 2.

7. Structure de fibre optique selon la revendication 5, dans laquelle le nombre d'anneaux est égal à trois, quatre, cinq ou six.

8. Structure de fibre optique selon l'une quelconque des revendications 1 à 7, dans laquelle les structures tubulaires supplémentaires de la structure de support externe trouée ont des dimensions latérales d'un cinquième à cinq fois celles de la fibre trouée (20).

9. Structure de fibre optique selon l'une quelconque des revendications 1 à 7, dans laquelle les structures tubulaires supplémentaires de la structure de support externe trouée ont des dimensions latérales comprises entre la moitié de et deux fois celles de la fibre trouée (20).

10. Structure de fibre optique selon l'une quelconque des revendications précédentes, dans laquelle la structure de support externe trouée comprend également une enveloppe externe entourant l'agencement de structures tubulaires supplémentaires.

11. Préforme de fibre optique comprenant :
(a) un barreau de coeur ;
(b) une pluralité de capillaires de gaine agencés autour du barreau de coeur ;
(c) une enveloppe interne contenant les capillaires de gaine ; et
(d) une pluralité de capillaires de support (12) agencés autour de l'enveloppe interne.

12. Préforme de fibre optique selon la revendication 11, comprenant également une enveloppe externe contenant les capillaires de support.

13. Préforme de fibre optique selon la revendication 11 ou 12, dans laquelle les capillaires de support ont des dimensions latérales comprises entre un cinquième et cinq fois celles de l'enveloppe interne.

14. Préforme de fibre optique selon la revendication 11 ou 12, dans laquelle les capillaires de support ont des dimensions latérales comprises entre la moitié de et deux fois celles de l'enveloppe interne.

15. Préforme de fibre optique selon l'une quelconque des revendications 11 à 14, dans laquelle le barreau de coeur est creux.

16. Préforme de fibre optique selon l'une quelconque des revendications 11 à 14, dans laquelle le barreau de coeur est plein.

17. Préforme de fibre optique selon l'une quelconque des revendications Il à 16, dans laquelle les capillaires de support sont agencés en une pluralité d'anneaux concentriques dans la région du barreau de coeur.

18. Préforme de fibre optique selon la revendication 17, dans laquelle le nombre d'anneaux est égal à 2.

19. Préforme de fibre optique selon la revendication 17, dans laquelle le nombre d'anneaux est égal à trois, quatre, cinq ou six.

20. Procédé de fabrication d'une préforme de fibre trouée comprenant :
(a) l'agencement d'un barreau de coeur et d'une pluralité de capillaires de gaine au sein d'une première enveloppe ;
(b) l'agencement de la première enveloppe et d'une pluralité de capillaires de support (12) pour former un ensemble de tube ; et
(c) la réduction de l'ensemble de tube en une préforme.

21. Procédé de fabrication d'une fibre trouée comprenant :
(a) la fabrication d'une préforme de fibre trouée selon le procédé de la revendication 20 ; et
(b) l'étirage d'une fibre trouée depuis la préforme.

22. Procédé selon la revendication 20 ou 21, dans lequel les capillaires de support sont agencés au sein d'une enveloppe externe.

23. Procédé pour guider la lumière le long d'une structure de fibre optique, le procédé comprenant l'utilisation d'une structure de fibre optique comprenant une fibre trouée (20) agencée dans une structure de support externe trouée, dans laquelle la fibre trouée est entourée par une première structure tubulaire et dans laquelle la structure de support externe trouée comprend une pluralité de structures tubulaires supplémentaires agencées autour de la première structure tubulaire, et l'agencement de la lumière pour avoir un champ modal s'étendant dans un plan en section transversale à travers la fibre trouée, dans lequel le champ modal est confiné dans la fibre trouée de sorte que moins de 10 %, 5 %, 2 %, 1 %, 0,5 % ou 0,01 % de sa puissance s'étende au-delà de la fibre trouée dans la structure de support externe trouée.

## Patentansprüche

1. Faseroptische Struktur mit einer Faser mit Löchern (holey fibre) (20), die von einer ersten röhrenförmigen Struktur umgeben ist und die in einer äußeren Trägerstruktur mit Löchern angeordnet ist, wobei die äußere Trägerstruktur mit Löchern eine Mehrzahl von weiteren röhrenförmigen Strukturen (22, 32) aufweist, die um die erste röhrenförmige Struktur herum angeordnet sind.

2. Faseroptische Struktur nach Anspruch 1, **dadurch gekennzeichnet, daß** die weiteren röhrenförmigen Strukturen der äußeren Trägerstruktur mit Löchern eine Querabmessung haben, die mindestens fünfmal größer ist als die Querabmessung der Löcher in der Faser (20) mit Löchern.

3. Faseroptische Struktur nach Anspruch 1, **dadurch gekennzeichnet, daß** die weiteren röhrenförmigen Strukturen der äußeren Trägerstruktur mit Löchern ein Quermaß aufweisen, das mindestens zehnmal größer ist als das Quermaß der Löcher in der Faser (20) mit Löchern.

4. Faseroptische Struktur nach einem der vorhergehenden Ansprüche, **dadurch gekennzeichnet, daß** die Faser (20) mit Löchern einen massiven oder hohlen Kern aufweist, der von einem Mantel mit Löchern umgeben ist.

5. Faseroptische Struktur nach Anspruch 4, **dadurch gekennzeichnet, daß** der Mantel mit Löchern Kavitäten aufweist, die in einer Mehrzahl von Ringen konzentrisch um den Kern angeordnet sind.

6. Faseroptische Struktur nach Anspruch 5, **dadurch gekennzeichnet, daß** die Anzahl von Ringen zwei beträgt.

7. Faseroptische Struktur nach Anspruch 5, **dadurch gekennzeichnet, daß** die Anzahl von Ringen drei, vier, fünf oder sechs beträgt.

8. Faseroptische Struktur nach einem der Ansprüche 1 bis 7, **dadurch gekennzeichnet, daß** die weiteren röhrenförmigen Strukturen der äußeren Trägerstruktur mit Löchern ein Quermaß zwischen einem Fünftel und dem Fünffachen des Quermaßes der Faser (20) mit Löchern haben.

9. Faseroptische Struktur nach einem der Ansprüche 1 bis 7, **dadurch gekennzeichnet, daß** die weiteren röhrenförmigen Strukturen der äußeren Trägerstruktur mit Löchern ein Quermaß zwischen der Hälfte und dem Doppelten des Quermaßes der Faser (20) mit Löchern haben.

10. Faseroptische Struktur nach einem der vorhergehenden Ansprüche, **dadurch gekennzeichnet, daß** die äußere Trägerstruktur mit Löchern darüber hinaus eine äußere Hülle aufweist, welche die Anordnung der weiteren röhrenförmigen Strukturen umgibt.

11. Faseroptischer Vorformling mit:
(a) einem Kern-Stab,
(b) einer Mehrzahl von Mantelkapillaren, die um den Kern-Stab herum angeordnet sind,
(c) einer inneren Hülle, welche die Mantelkapillaren enthält, und
(d) einer Mehrzahl von stützenden Kapillaren bzw. Trägerkapillaren (12), die um die innere Hülle herum angeordnet sind.

12. Faseroptischer Vorformling nach Anspruch 11, darüber hinaus mit einer äußeren Hülle, welche die Trägerkapillaren enthält.

13. Faseroptischer Vorformling nach Anspruch 11 oder 12, **dadurch gekennzeichnet, daß** die Trägerkapillaren eine Querabmessung zwischen einem Fünftel und dem Fünffachen der Querabmessung der inneren Hülle aufweisen.

14. Faseroptischer Vorformling nach Anspruch 11 oder 12, **dadurch gekennzeichnet, daß** die Trägerkapillaren ein Quermaß zwischen der Hälfte und dem Doppelten des Quermaßes der inneren Hülle aufweisen.

15. Faseroptischer Vorformling nach einem der Ansprüche 11 bis 14, **dadurch gekennzeichnet, daß** der Kern-Stab hohl ist.

16. Faseroptischer Vorformling nach einem der Ansprüche 11 bis 14, **dadurch gekennzeichnet, daß** der Kern-Stab massiv ist.

17. Faseroptischer Vorformling nach einem der Ansprüche 11 bis 16, **dadurch gekennzeichnet, daß** die Mantelkapillaren in einer Mehrzahl von Ringen konzentrisch um den Kern-Stab angeordnet sind.

18. Faseroptischer Vorformling nach Anspruch 17, **dadurch gekennzeichnet, daß** die Anzahl von Ringen zwei beträgt.

19. Faseroptischer Vorformling nach Anspruch 17, **dadurch gekennzeichnet, daß** die Anzahl von Ringen drei, vier, fünf oder sechs beträgt.

20. Verfahren zur Herstellung eines Faservorformlings mit Löchern, mit:
(a) Anordnen eines Kem-Stabs und einer Mehrzahl von Mantelkapillaren innerhalb einer ersten Hülle,
(b) Anordnen der ersten Hülle und einer Mehrzahl von Trägerkapillaren (12), so daß eine Röhrenanordnung gebildet wird, und
(c) Reduzieren der Röhrenanordnung zu einem Vorformling.

21. Verfahren zum Herstellen einer Faser mit Löchern mit:
(a) Herstellen eines Faservorformlings mit Löchern gemäß dem Verfahren nach Anspruch 20 und
(b) Ziehen einer Faser mit Löchern aus dem Vorformling.

22. Verfahren nach Anspruch 20 oder 21, **dadurch gekennzeichnet, daß** die Trägerkapillaren innerhalb einer äußeren Hülle angeordnet sind.

23. Verfahren zum Führen von Licht entlang einer faseroptischen Struktur, wobei das Verfahren das Verwenden einer faseroptischen Struktur, welche eine Faser (20) mit Löchern aufweist, die in einer äußeren Trägerstruktur mit Löchern angeordnet ist, wobei die Faser mit Löchern von einer ersten röhrenförmigen Struktur umgeben ist und wobei die äußere Trägerstruktur mit Löchern eine Mehrzahl von weiteren röhrenförmigen Strukturen aufweist, welche um die erste röhrenförmige Struktur herum angeordnet sind, und das Anordnen des Lichts aufweist, so daß es ein Modenfeld aufweist, das sich in einer Querschnittsebene durch die Faser mit Löchern erstreckt, wobei das Modenfeld auf die Faser mit Löchern beschränkt ist, so daß sich weniger als 10%, 5%, 2%, 1%, 0,5% oder 0,01 % seiner Leistung über die Faser mit Löchern hinaus in die äußere Trägerstruktur mit Löchem erstreckt.
